# EUROPÄISCHE PATENTSCHRIFT

(11) **EP 1 399 653 B1**
(45) Veröffentlichungstag und Bekanntmachung des Hinweises auf die Patenterteilung: **24.08.2005**
(21) Anmeldenummer: 02742766.5
(22) Anmeldetag: 18.05.2002
(51) Int. Cl.: F01N 3/20

(54) **VORRICHTUNG UND VERFAHREN ZUR DOSIERUNG EINES REDUKTIONSMITTELS ZUR ENTFERNUNG VON STICKOXIDEN AUS ABGASEN**
DEVICE AND METHOD FOR METERING A REDUCTANT FOR ELIMINATING NITROGEN OXIDE FROM EXHAUST GASES
DISPOSITIF ET PROCEDE DE DOSAGE D'UN AGENT REDUCTEUR PERMETTANT D'ELIMINER DES OXYDES D'AZOTE CONTENUS DANS DES GAZ D'ECHAPPEMENT

(30) Priorität: 08.06.2001 DE 10127834
(43) Veröffentlichungstag der Anmeldung: 24.03.2004
(73) Patentinhaber: ROBERT BOSCH GMBH, 70442 Stuttgart (DE)
(72) Erfinder: SCHARSACK, Cord, 71101 Schoenaich (DE)
(86) Internationale Anmeldenummer: PCT/DE2002/001800
(87) Internationale Veröffentlichungsnummer: WO 2002/101209

(56) Entgegenhaltungen:
- DE-A- 19 750 138
- DE-A- 19 947 198
- US-A- 5 605 042
- US-B1- 6 167 698

## Beschreibung

### Stand der Technik

Die Erfindung geht aus von einer Vorrichtung beziehungsweise einem Verfahren zur Dosierung eines Reduktionsmittels, insbesondere von Harnstoff bzw. einer Harnstoff-Wasser-Lösung im Rahmen einer katalytischen Abgasnachbehandlung, nach der Gattung der unabhängigen Ansprüche.

Um eine Verminderung von NO_{X}-Bestandteilen in Abgasen zu erzielen, wurden insbesondere für Dieselmotoren Reduktionskatalysatoren entwickelt, die üblicherweise in sogenannte SCR-Katalysatoren (engl. "Selective Catalytic Reduction") und Speicherkatalysatoren unterteilt werden. Die sogenannten SCR-Katalysatoren reduzieren die Stickoxide durch ein Reduktionsmittel, beispielsweise Harnstoff und/oder Ammoniak, welches dem Abgas zugegeben wird, während die sogenannten Speicherkatalysatoren vorzugsweise mit Kohlenwasserstoffen des mitgeführten Brennkraftmaschinen-Brennstoffs in sogenannten Abgasfettphasen periodisch regeneriert werden.

Aus der deutschen Patentanmeldung DE 199 47 198 ist eine Einrichtung bekannt, welche zum Entfernen von Stickoxiden in Abgasen beispielsweise aus einem Dieselmotor Harnstoff als Reduktionsmittel zudosiert. Die Dosierung erfolgt über ein Ventil, das Harnstoffdosen freigibt, die über die elektrische Ansteuerung des Dosierventils, dessen Drosselquerschnitt und den am Drosselventil anliegenden Druckunterschied bestimmt werden. Der vor dem Ventil anliegende Druck wird gemessen und innerhalb eines Toleranzbereichs konstant gehalten.

Aus der US 6 167 698 and DE 197 50 138 ist es bekannt, ein Reduktionsmittel über einen Injektor einer Katalysatoranordnung zuzuführen.

### Vorteile der Erfindung

Die erfindungsgemäße Dosiervorrichtung beziehungsweise das erfindungsgemäße Verfahren mit den Merkmalen der unabhängigen Ansprüche haben demgegenüber den Vorteil, eine Kompensation von Fertigungstoleranzen von Dosierrohr und Dosierleitung hinsichtlich der Dosiergenauigkeit zu ermöglichen, die Dosiergenauigkeit bei verschleißenden und/oder verstopfenden Dosierrohraustrittsöffnungen zu erhalten beziehungsweise den Einfluss des Abgasgegendrucks auf die Dosiergenauigkeit zu eliminieren. Darüber hinaus ist unabhängig von der speziellen Ausgestaltung des Dosierrohrs beziehungsweise der Dosierleitungen keine Neuaufnahme einer Ventilkennlinie im Steuergerät nötig, so dass sich Zeitvorteile in der Applikation der Erfindung ergeben.

Durch die in den abhängigen Ansprüchen aufgeführten Maßnahmen sind vorteilhafte Weiterbildungen und Verbesserungen der in den unabhängigen Ansprüchen angegebenen Verfahren beziehungsweise Dosiervorrichtung möglich.

Insbesondere vorteilhaft ist es, eine konstante Druckdifferenz über das Dosiermittel bzw. Dosierventil einzustellen, so dass die Differenz des Drucks vor und hinter dem Dosiermittel unabhängig von der Dosiermenge und unabhängig von sich ändernden Umgebungsbedingungen konstant bleibt. Alternativ kann in vorteilhafter Weise ein konstantes Druckverhältnis über das Dosiermittel beziehungsweise Dosierventil eingestellt werden, so dass der Quotient des Reduktionsmitteldrucks vor dem Dosiermittel mit dem Druck hinter dem Dosiermittel konstant bleibt. Dadurch wird eine gleichbleibende Dosiergenauigkeit gewährleistet, so dass sowohl ein Ammoniakdurchbruch infolge einer Überdosierung als auch Einbußen beim Stickoxidumsatz infolge einer Unterdosierung sicher vermieden werden können.

### Zeichnung

Ausführungsbeispiele der Erfindung sind in der Zeichnung dargestellt und in der nachfolgenden Beschreibung näher erläutert. Es zeigen
Fig. 1 eine mit einem Drucklufttank, einem Harnstofftank und einer Katalysatoranordnung zusammengeschaltete Dosiervorrichtung und
Fig. 2 eine entsprechende Anordnung mit einer alternativen Dosiervorrichtung.
Fig. 3 zeigt ein Regelkreisdiagramm und
Fig. 4 eine weitere alternative Dosiervorrichtung.

### Beschreibung der Ausführungsbeispiele

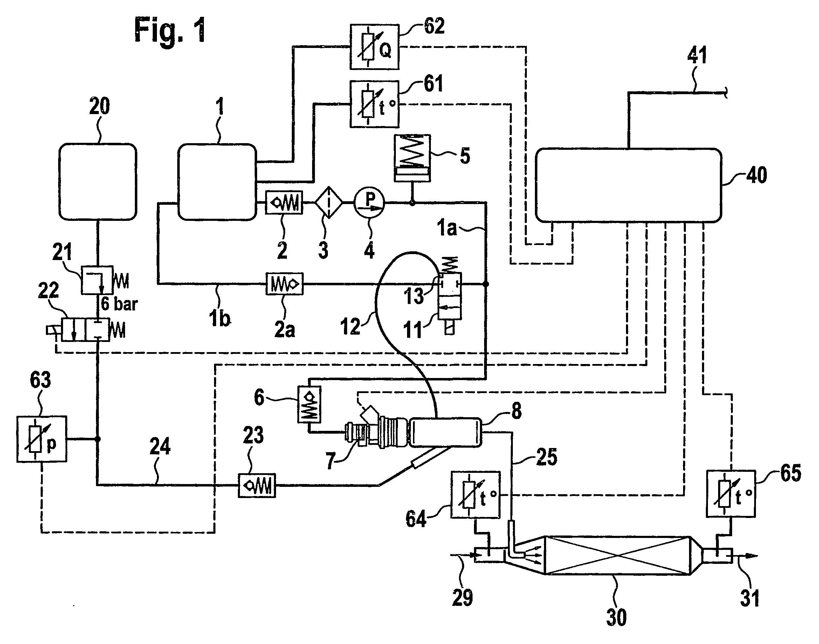

In Fig. 1 ist mit 1 ein Harnstofftank bezeichnet, aus welchem eine Harnstoff-Wasser-Lösung über eine Harnstoffleitung 1a mit Rückschlagventil 2 und einem als Filtersieb ausgeführtem Filter 3 von einer drehzahlgesteuerten Dosierpumpe 4 angesaugt und über ein Rückschlagventil 6 zu einem Dosierventil 7 einer Mischkammer 8 gefördert wird. Eine geförderte Übermenge wird über ein Druckbegrenzungsventil 11 und eine mit einem Rückschlagventil 2a versehene Rückführleitung 1b zur Saugseite der Pumpe zurückgeführt. Ein Druckbegrenzungsventil ist beispielsweise aus der DE 198 05 070 C2 bekannt. In der Figur 1 der DE 198 05 070 C2 ist ein solches Ventil mit dem Bezugszeichen 5 versehen und wird dort als Membranventil bezeichnet, da eine Membran eine die Flüssigkeit führende erste Kammer, deren Druck geregelt werden soll, von einer zweiten Kammer trennt, die eine Feder aufweist. Diese Feder drückt die Membran gegen eine Überdruckmengen an Flüssigkeit abführende Abflussöffnung, die in der ersten Kammer angeordnet ist. Die zweite Kammer (Bezugszeichen 20 in der DE 198 05 070 C2) ist über Leitungen ebenfalls mit einem Druck beaufschlagbar, so dass der Druck, der über das Druckbegrenzungventil eingestellt werden soll, variiert werden kann. Dies kann hydraulisch, wie in der DE 198 05 070 C2 beschrieben, oder auch pneumatisch geschehen. Der Anschluß einer solchen Leitung an das Druckbegrenzungsventil ist in der vorliegenden Anmeldung als Pneumatikanschluss 13 bezeichnet. An dem Pneumatikanschluss 13 ist eine Leitung 12 beispielsweise in Form eines Schlauches angeschlossen, dessen anderes Ende mit der Mischkammer 8 verbunden ist, so dass das Druckbegrenzungsventil 11 den Druck der HarnstoffwasserLösung in der Leitung 1a in Abhängigkeit vom Druck in der Mischkammer regeln kann. Zwischen dem Druckbegrenzungsventil 11 und der Dosierpumpe 4 ist ein Druck- bzw. Pulsationsdämpfer 5 an die Leitung 1a angeschlossen. Aus einem Druckluftbehälter 20 ist Druckluft über eine Druckluftleitung 24 mit einem Druckbegrenzer 21, einem 2/2-Wegeventil 22 und einem Rückschlagventil 23 in die Mischkammer einbringbar. Eine Aerosolleitung 25 führt von der Mischkammer 8 zum Katalysator 30, der auf der einen Seite eine Abgaszufuhr 29 und auf der gegenüberliegenden Seite einen Abgasauslaß 31 aufweist. Der Harnstofftank 1 ist mit einem Füllstandsensor 62 und einem Temperatursensor 61 versehen. Temperatursensoren 64 und 65 messen die Temperatur des Abgases am Einlass bzw. Auslass des Katalysators 30. Ferner ist zwischen dem 2/2-Wegeventil 22 und dem Rückschlagventil 23 ein Drucksensor 63 vorgesehen. Ein Steuergerät 40 ist sowohl mit den Sensoren 61 bis 65 als auch mit dem Dosierventil 7 elektrisch verbunden. Über eine CAN-Datenleitung 41 (CAN ist eine Abkürzung für den englischen Ausdruck "Controlled Area Network") ist das Steuergerät 40 mit der Spannungsversorgung und weiteren elektronischen Komponenten im Kraftfahrzeug, insbesondere dem Motorsteuergerät, verbunden.

Das Dosierventil 7 dosiert die erforderliche Harnstoffwasserlösung in die Mischkammer 8 ein. In der Mischkammer wird unter Beaufschlagung der Harnstoffwasserlösung mittels der Druckluft ein Aerosol und ein Wandfilm erzeugt, welches bzw. welcher über die Aerosolleitung 25 in den Katalysator 30 eingebracht wird. Das Steuergerät 40 erfaßt hierbei Signale, die von einem übergeordneten Motorsteuergerät über die CAN-Datenleitung 39 empfangen werden, sowie die Signale von Druck-, Temperatur- bzw. Füllstandsensoren 61 bis 65, welche an sich bekannt sind und hier nicht weiter erläutert werden. Das Ventil 22 regelt den Druck in der Druckluftleitung. Das Steuergerät 40 berechnet aus den Sensorinformationen eine Harnstoffdosiermenge, welche einem den Katalysator 30 durchströmenden Abgas zugegeben werden soll. Das Steuergerät verwendet hierzu vom Motorsteuergerät über die Datenleitung 41 zugeführte Daten des Motorbetriebszustands sowie die aus der Dosierungsvorrichtung und dem Katalysator stammenden Sensordaten. Der Druck in der Mischkammer 8 kann konstruktionsbedingt in Abhängigkeit von den gewählten Abmessungen der Leitung 25 und des in den Abgastrakt ragenden Dosierrohrs beziehungsweise der Geometrie und Anzahl der Austrittsöffnungen am Dosierrohr variieren. Daneben beeinflusst auch der Abgasgegendruck beispielsweise infolge eines hinter dem Katalysator 30 angeordneten Partikelfilters den Druck in der Mischkammer. Derartige Einflüsse auf den Mischkammerdruck können fertigungsbedingt, applikationsbedingt, verschleißbedingt oder prozessbedingt sein. Die Schlauchleitung 12 gewährleistet nun, dass unabhängig von diesen Einflüssen die vom Steuergerät vorgesehene Dosiermenge auch tatsächlich in den Abgastrakt eingespritzt wird: liegt über die Schlauchleitung ein erhöhter Mischkammerdruck am Druckbegrenzungsventil an, so reguliert dieses den Druck in der Leitung 1a auf einen höheren Wert ein, und zwar dergestalt, dass die Differenz der Drücke vor und hinter dem Dosierventil konstant bleiben, oder dass das Verhältnis der Drücke vor und hinter dem Dosierventil 7 konstant bleibt.

Alternativ kann die Dosiervorrichtung auch ohne Druckluftunterstützung verwendet werden, d. h. ohne Verwendung der Bauteile 20 bis 24 und 63.

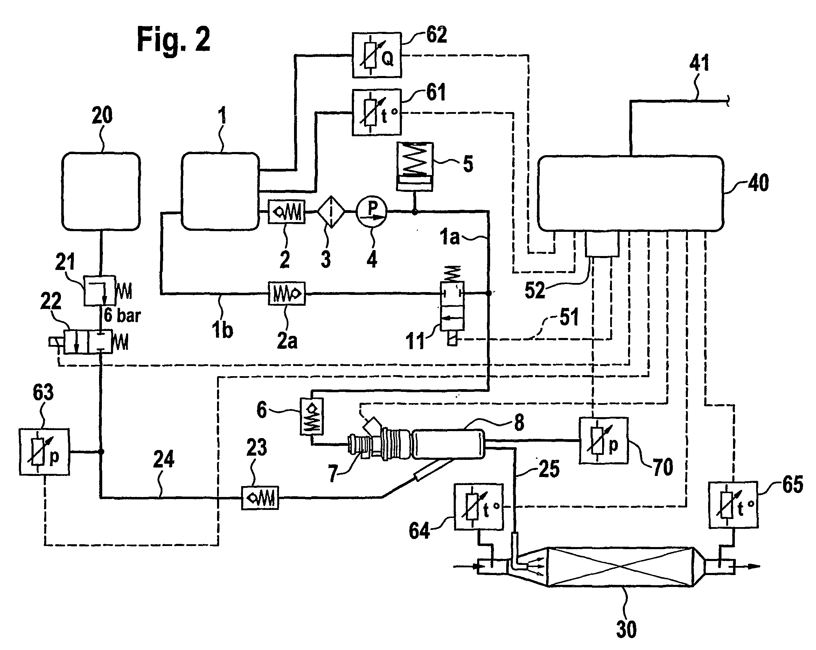

Fig. 2 zeigt eine weitere alternative Ausführungsform, bei der gleiche Bauteile wie in Fig. 1 mit gleichen Bezugszeichen versehen sind. Im Vergleich zu Fig. 1 weist das Druckbegrenzungsventil 11 keinen über eine Leitung mit der Mischkammer verbundenen Pneumatikanschluss auf. Dafür besitzt das Steuergerät 40 einen über eine Leitung 51 mit dem Druckbegrenzungsventil 11 elektrisch verbundenen Regler 52, der als Software im Steuergerät integriert ist. Des Weiteren detektiert ein Drucksensor 70 den Druck in der Mischkammer 8 und leitet seine Drucksignale an den Regler 52 weiter.

Eine Anpassung des Reduktionsmitteldrucks in der Leitung 1a erfolgt hier durch elektrische Ansteuerung des Druckbegrenzungsventils, wobei bei erhöhtem Druck in der Mischkammer das Druckbegrenzungsventil erst bei einem entsprechend erhöhten Druck in der Leitung 1a eine Übermenge an Reduktionsmittel über die Leitung 1b in den Tank 1 zurückführt, so dass die Druckdifferenz bzw. das Verhältnis der Drücke vor und hinter dem Dosierventil 7 konstant bleibt.

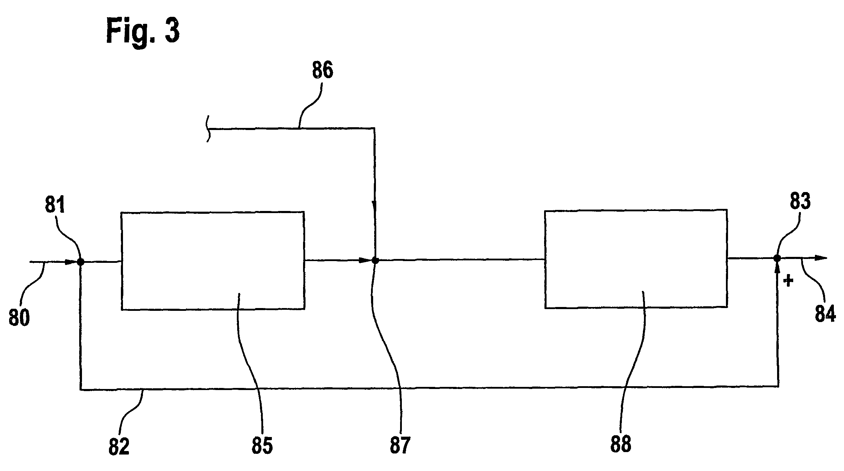

Eine Anpassung der Dosiermenge an Harnstoff-Wasser-Lösung erfolgt alternativ oder in Kombination mit einer elektrischen Ansteuerung des Druckbegrenzungsventils über im Regler 52 abgelegte Korrekturkennfelder zur Variation der Dosierventilansteuerung. Das Dosierventil 7 wird vom Steuergerät angesteuert, sobald Bedarf an Reduktionsmittel im Abgastrakt besteht. Die Dosierung erfolgt hierbei gepulst, so dass ein Tastverhältnis definiert werden kann, das sich aus dem Verhältnis der Zeitdauern von geschlossenen zu Zeitdauern von geöffneten Ventilzuständen während der Zeit der Ansteuerung ergibt. Dieses Tastverhältnis kann der Regler 52 in Abhängigkeit vom gemessenen in der Mischkammer herrschenden Druck variieren. Erhöht sich der Druck in der Mischkammer aus irgendeinem vorgenannten Grunde, wird der Zeitanteil geöffneter Ventilzustände erhöht, so dass trotz des erhöhten Gegendrucks das Dosierventil die benötigte Dosiermenge in die Mischkammer einspritzen kann. Einen beispielhaften Regelalgorithmus hierzu zeigt Figur 3.

Der Regler 52 verarbeitet gemäß Figur 3 einen dem Tastverhältnis proportionalen Tastverhältnis-Wert 80, indem eine Umrecheneinheit 85 aus einem momentan vorliegenden Tastverhältnis-Wert (beispielsweise über eine abgespeicherte lineare Funktion) den daraus resultierenden Solldruckwert in der Mischkammer bestimmt. Von diesem Solldruckwert wird, symbolisch dargestellt im Summationsknoten 87, der Mischkammerdruck-Istwert 86 abgezogen, der vom Drucksensor 70 an den Regler 52 gemeldet wird. Der Differenzwert wird einer Korrekturwert-Berechnungseinheit 88 zugeführt, die in Abhängigkeit vom Differenzwert einen Korrekturwert für das Tastverhältnis festlegt. Die hierzu erforderliche abgespeicherte Korrekturkennlinie in einem Diagramm, in dem die Korrekturwerte auf der Ordinate und die Differenzwerte auf der Abszisse aufgetragen sind, hat beispielsweise die Form einer durch den Ursprung gehenden Geraden mit negativer Steigung, wobei für betragsmässig grosse Differenzwerte die Gerade in Kurvenabschnitte mit betragsmässig kleiner Steigung bzw. mit Steigung Null übergeht. Der Korrekturwert wird, symbolisiert durch den Verzweigungsknoten 81 und die Leitung 82, im Summationsknoten 83 zum momentan eingestellten Tastverhältnis-Wert 80 addiert, so dass der Regler 52 über die Leitung 51 ein korrigiertes Tastverhältnis 84 am Druckbegrenzungsventil 11 einstellen kann.

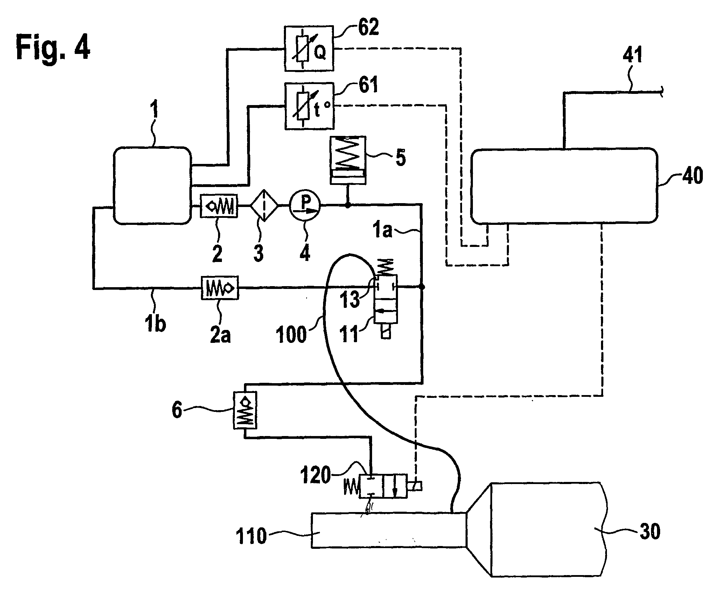

Figur 4 illustriert eine Dosiervorrichtung, die in Abwandlung der Anordnung nach Figur 1 weder Mittel zur Luftdosierung noch eine Mischkammer aufweist. Das hier mit Bezugszeichen 120 versehene Dosierventil ist direkt auf dem zum Katalysator 30 führenden Abgasrohr 110 montiert, so dass seine Öffnung direkt in den Abgastrakt hineinragt. Der Pneumatikanschluss 13 des Druckbegrenzungsventils 11 ist über eine Schlauchleitung 100 mit dem Abgasrohr 110 verbunden.

Analog zur Anordnung nach Figur 1 stellt das Druckbegrenzungsventil 11 den Druck in der Leitung 1a in Abhängigkeit vom hinter dem Dosierventil 120 herrschenden Druck, dem Druck im Abgasrohr 110, ein.

Alternativ zur Schlauchverbindung 100 kann hier auch die Lösung mit einem mit einem Drucksensor verbundenen Regler 52 entsprechend Figur 2 angewendet werden, wobei der Drucksensor den Druck im Abgasrohr 110 misst. Führungsgrösse im Regler 52 ist dann nicht ein Mischkammerdruck, sondern der im Abgasrohr herrschende Abgasgegendruck.

## Patentansprüche

1. Katalytische Abgasnachbehandlungsvorrichtung mit einer Vorrichtung zur Dosierung eines Reduktionsmittels, insbesondere von Harnstoff beziehungsweise einer Harnstoff-Wasser-Lösung, mit Mitteln zur Zufuhr des Reduktionsmittels in eine Katalysatoranordnung über eine Leitung zur Entfernung von Stickoxiden aus den Abgasen insbesondere eines Dieselmotors, wobei am Ende der Leitung ein Dosiermittel, insbesondere ein Dosierventil (7), angeordnet ist, **dadurch gekennzeichnet, dass** Mittel (11, 12, 13; 11, 52, 70; 11, 13, 100) zur Regelung des Drucks des Reduktionsmittels in der Leitung vorgesehen sind und dass die Mittel zur Regelung des Drucks mit einem Druckveränderungen auf der der Leitung abgewandten Ausgangsseite des Dosiermittels erfassenden Druckerfassungselement (12; 70; 100) wechselwirken können, so dass die Druckveränderungen in die Druckregelung einfliessen.

2. Vorrichtung nach Anspruch 1, **dadurch gekennzeichnet, dass** das Dosiermittel (7; 120) mit dem Druckerfassungselement (12; 70; 100) wechselwirken kann, so dass die Druckveränderungen in die Dosierung einfliessen.

3. Vorrichtung nach Anspruch 1 oder 2, **dadurch gekennzeichnet, dass** die Differenz oder der Quotient aus dem Wert des Drucks in der Leitung mit dem Druck auf der der Leitung abgewandten Ausgangsseite des Dosiermittels konstant gehalten wird.

4. Vorrichtung nach einem der vorhergehenden Ansprüche, **dadurch gekennzeichnet, dass** die Mittel zur Regelung des Drucks ein Druckbegrenzungsventil (11) enthalten.

5. Vorrichtung nach Anspruch 4, **dadurch gekennzeichnet, dass** das Druckbegrenzungsventil einen Pneumatikanschluss (13) aufweist, dass das Druckerfassungselement eine mit dem Druckbegrenzungsventil verbundene weitere Leitung (12) aufweist und dass die Leitung mit dem Pneumatikanschluss verbunden ist.

6. Vorrichtung nach einem der vorhergehenden Ansprüche, **dadurch gekennzeichnet, dass** das Druckerfassungselement einen Drucksensor (70) aufweist.

7. Vorrichtung nach Anspruch 6, **dadurch gekennzeichnet, dass** der Drucksensor mit einem Regler, insbesondere mit einem in einem Steuergerät (40) integrierten Regler (52), verbunden ist, der die Mittel zur Regelung des Drucks bzw. das Dosiermittel in Abhängigkeit von den Druckveränderungen ansteuern kann.

8. Vorrichtung nach einem der vorhergehenden Ansprüche, **dadurch gekennzeichnet, dass** die dosierte Reduktionsmittelzufuhr in eine Mischkammer (8) zur Bildung eines Aerosols erfolgt, so dass über eine Aerosolleitung (25) das Aerosol in die Katalysatoranordnung (30) eingeführt werden kann.

9. Vorrichtung nach Anspruch 8, **dadurch gekennzeichnet, dass** Mittel (20, 21, 22, 23, 24, 63) zur dosierten Luftzufuhr in die Mischkammer (8) vorgesehen sind.

10. Vorrichtung nach einem der Ansprüche 1 bis 7, **dadurch gekennzeichnet, dass** das Dosiermittel an einem zur Katalysatoranordnung führenden Abgasrohr montiert ist, wobei die der Leitung abgewandte Ausgangsseite des Dosiermittels in das Abgasrohr hineinragt.

11. Verfahren zur Dosierung eines Reduktionsmittels, insbesondere von Harnstoff beziehungsweise einer Harnstoff-Wasser-Lösung, wobei das Reduktionsmittel einer Katalysatoranordnung zur Entfernung von Stickoxiden aus den Abgasen insbesondere eines Dieselmotors mittels eines Dosiermittels, insbesondere eines Dosierventils, dosiert zugeführt wird, **dadurch gekennzeichnet, dass** der Druck des Reduktionsmittels geregelt wird und dass Druckveränderungen auf der der Katalysatoranordnung zugewandten Seite des Dosiermittels erfasst werden und in die Druckregelung einfliessen.

12. Verfahren nach Anspruch 11, **dadurch gekennzeichnet, dass** die Druckveränderungen auf der der Katalysatoranordnung zugewandten Seite des Dosiermittels in die Ansteuerung des Dosiermittels einfliessen.

## Claims

1. Catalytic exhaust gas aftertreatment apparatus for metering a reducing agent, in particular urea or a urea-water solution, having means for feeding the reducing agent into a catalytic converter arrangement via a line for removing nitrogen oxides from the exhaust gases in particular from a diesel engine, with a metering means, in particular a metering valve (7), being arranged at the end of the line, **characterized in that** there are means (11, 12, 13; 11, 52, 70; 11, 13, 100) for regulating the pressure of the reducing agent in the line, and **in that** the means for regulating the pressure can interact with a pressure-recording element (12; 70; 100), which records pressure changes on the exit side, remote from the line, of the metering means, so that the pressure changes are input into the pressure regulation.

2. Apparatus according to Claim 1, **characterized in that** the metering means (7; 120) can interact with the pressure-recording element (12; 70; 100) so that the pressure changes are input into the metering.

3. Apparatus according to Claim 1 or 2, **characterized in that** the difference or quotient formed from the value of the pressure in the line and the pressure on the exit side, remote from the line, of the metering means is kept constant.

4. Apparatus according to one of the preceding claims, **characterized in that** the means for regulating the pressure include a pressure-limiting valve (11).

5. Apparatus according to Claim 4, **characterized in that** the pressure-limiting valve has a pneumatic connection (13), **in that** the pressure-recording element has a further line (12) connected to the pressure-limiting valve, and **in that** the line is connected to the pneumatic connection.

6. Apparatus according to one of the preceding claims, **characterized in that** the pressure-recording element has a pressure sensor (70).

7. Apparatus according to Claim 6, **characterized in that** the pressure sensor is connected to a regulator, in particular to a regulator (52) which is integrated in a control unit (40), which regulator can actuate the means for regulating the pressure and/or the metering means as a function of the pressure changes.

8. Apparatus according to one of the preceding claims, **characterized in that** the metered supply of reducing agent is passed into a mixing chamber (8) so as to form an aerosol, so that the aerosol can be introduced into the catalytic converter arrangement (30) via an aerosol line (25).

9. Apparatus according to Claim 8, **characterized in that** there are means (20, 21, 22, 23, 24, 63) for the metered supply of air into the mixing chamber (8).

10. Apparatus according to one of Claims 1 to 7, **characterized in that** the metering means is mounted on an exhaust pipe leading to the catalytic converter arrangement, with the exit side, remote from the line, of the metering means projecting into to exhaust pipe.

11. Method for metering a reducing agent, in particular urea or a urea-water solution, the reducing agent being fed in metered fashion, by means of a metering means, in particular a metering valve, to a catalytic converter arrangement for removing nitrogen oxides from the exhaust gases in particular from a diesel engine, **characterized in that** the pressure of the reducing agent is regulated, and **in that** pressure changes on the side of the metering means facing the catalytic converter arrangement are recorded and input into the pressure regulation.

12. Method according to Claim 11, **characterized in that** the pressure changes on the side of the metering means facing the catalytic converter arrangement are input into the actuation of the metering means.

## Revendications

1. Dispositif de post-traitement catalytique de gaz d'échappement comprenant un dispositif de dosage d'un agent réducteur, notamment d'urée ou d'une solution urée-eau, avec des moyens pour amener l'agent réducteur dans un système catalyseur par une conduite afin d'éliminer des oxydes d'azote des gaz d'échappement notamment d'un moteur Diesel, avec un moyen de dosage, disposé à l'extrémité de la conduite, notamment une soupape de dosage (7),
**caractérisé en ce que**
des moyens (11, 12, 13 ; 11, 52, 70 ; 11, 13, 100) prévus pour réguler la pression de l'agent réducteur dans la conduite, peuvent interagir avec un élément détecteur de pression (12 ; 70 ; 100) détectant des variations de pression du côté sortie du moyen de dosage opposé à la conduite de telle sorte que les variations de pression interviennent dans la régulation de pression.

2. Dispositif selon la revendication 1,
**caractérisé en ce que**
le moyen de dosage (7 ; 120) peut interagir avec l'élément détecteur de pression (12 ; 70 ; 100) de telle sorte que les variations de pression interviennent dans le dosage.

3. Dispositif selon la revendication 1 ou 2,
**caractérisé en ce que**
la différence ou le quotient de la valeur de la pression dans la conduite avec la pression régnant du côté sortie du moyen de dosage opposé à la conduite, est maintenu(e) constant(e)

4. Dispositif selon l'une quelconque des revendications précédentes,
**caractérisé en ce que**
les moyens pour réguler la pression comprennent une soupape de limitation de pression (11).

5. Dispositif selon la revendication 4,
**caractérisé en ce que**
la soupape de limitation de pression présente un branchement pneumatique (13), l'élément détecteur de pression présente une autre conduite (12) reliée à la soupape de limitation de pression, et la conduite est reliée au branchement pneumatique.

6. Dispositif selon l'une quelconque des revendications précédentes,
**caractérisé en ce que**
l'élément détecteur de pression présente un capteur de pression (70).

7. Dispositif selon la revendication 6,
**caractérisé en ce que**
le capteur de pression est relié à un régulateur, notamment à un régulateur (52) intégré dans un appareil de commande (40) qui peut commander les moyens pour réguler la pression ou le moyen de dosage en fonction des variations de pression.

8. Dispositif selon l'une quelconque des revendications précédentes,
**caractérisé en ce que**
l'amenée dosée de l'agent réducteur s'effectue dans une chambre de mélange (8) pour former un aérosol, permettant d'introduire l'aérosol par une conduite d'aérosol (25) dans le système catalyseur (30).

9. Dispositif selon la revendication 8,
**caractérisé en ce que**
des moyens (20, 21, 22, 23, 24, 63) sont prévus pour une amenée d'air dosée dans la chambre de mélange (8).

10. Dispositif selon l'une quelconque des revendications 1 à 7,
**caractérisé en ce que**
le moyen de dosage est monté sur un tube de gaz d'échappement allant vers le système catalyseur, le côté sortie du moyen de dosage opposé à la conduite pénétrant dans le tube de gaz d'échappement.

11. Procédé de dosage d'un agent réducteur, notamment d'urée ou d'une solution urée-eau, selon lequel l'agent réducteur est amené dans un système catalyseur pour éliminer des oxydes d'azote des gaz d'échappement notamment d'un moteur diesel, de façon dosée à l'aide d'un moyen de dosage en particulier une soupape de dosage,
**caractérisé en ce que**
la pression de l'agent réducteur est régulée, et des variations de pression sont détectées du côté du moyen de dosage tourné vers le système catalyseur et interviennent dans la régulation de pression.

12. Procédé selon la revendication 11,**caractérisé en ce que**
les variations de pression du côté du moyen de dosage tourné vers le système catalyseur interviennent dans la commande du moyen de dosage.
